Europäisches Patentamt

European Patent Office

Office européen des brevets

(19)

(11) Veröffentlichungsnummer: **0 069 797**

**A1**

(12)

# EUROPÄISCHE PATENTANMELDUNG

(21) Anmeldenummer: 81105535.9

(22) Anmeldetag: 15.07.81

(51) Int. Cl.³: **E 04 F 11/14**
**B 32 B 13/00**

(43) Veröffentlichungstag der Anmeldung:
19.01.83 Patentblatt 83/3

(84) Benannte Vertragsstaaten:
AT BE CH DE FR IT LI NL

(71) Anmelder: Schauffele, Fritz
Kiessstasse 14
D-7000 Stuttgart 70(DE)

(72) Erfinder: Schauffele, Fritz
Kiessstasse 14
D-7000 Stuttgart 70(DE)

(74) Vertreter: Hoeger, Stellrecht & Partner
Uhlandstrasse 14c
D-7000 Stuttgart 1(DE)

(54) Natursteinplatte für Treppenstufen und Verfahren zu ihrer Herstellung.

(57) Um bei der Herstellung von aus Naturstein oder gebundenen Natursteinteilen bestehenden, armierten Treppenstufen nicht zwei Plattenlagen miteinander verbinden und dann die Treppenstufen auf Ober- und Unterseite polieren zu müssen, wird eine Armierungsschicht (12) auf der Treppenstufenunterseite befestigt und so ausgebildet, daß sie aus einer Armierungs-einlage (14), einer das Aussehen der Unterseite verbessernden Flachmaterialschicht (16) sowie Gießharz (18) besteht, in welches die Armierungseinlage (14) und die Flachmaterialschicht (16) eingebettet sind.

Bei der Herstellung wird auf der nach oben gekehrten Treppenstufenunterseite mit wieder entfernbaren, kompressiblen Randstreifen (20) eine flache Wanne gebildet, in die die Bestandteile der Armierungsschicht (12) eingebracht werden. Dann wird die letztere mit einer Trennfolie (22) abgedeckt und mit der nächsten, fertigzustellenden Treppenstufe belastet.

Fig. 2

Fig. 3

Croydon Printing Company Ltd.

EP 0 069 797 A1

Natursteinplatte für Treppenstufen und Verfahren zu ihrer Herstellung

Die Erfindung betrifft eine Natursteinplatte für Treppenstufen, welche mit einer Schicht armiert ist, die eine in Kunstharz eingebettete Armierungseinlage aus hochzugfestem Material aufweist.

Da Stein und insbesondere Naturstein sich kaum auf Zug und damit auch kaum auf Biegung beanspruchen läßt, ging man bisher bei der Herstellung von Natursteinplatten der vorstehend erwähnten Art wie folgt vor: Man zersägte Natursteinblöcke in 3 cm dicke Platten, und um der Verbundplatte ein möglichst monolithisches Aussehen zu verleihen, klebte man 2 beim Zersägen nebeneinander liegende Platten mit Hilfe der beschriebenen Armierungsschicht zusammen. Anschließend wurde die Verbundplatte oben und unten poliert. Für die in Kunstharz eingebettete Armierungseinlage verwendete man ein Gewebe aus Glasfaserrovings.

Das bekannte Herstellungsverfahren und die dadurch gewonnene Natursteinplatte sind aus verschiedenen Gründen unbefriedigend: Zunächst einmal ist eine in der Plattenmitte angeordnete Armierungsschicht sowohl bei einer Biege- als auch bei einer Torsionsbeanspruchung einer Treppenstufe nicht besonders wirksam; ferner erhöht das Aufsägen der Natursteinblöcke in Platten, die nur die halbe Dicke der herzustellenden Verbundplatte aufweisen, die Sägezeit, den Verschleiß der einzusetzenden Diamantsägeblätter und den Ausschuß - springt infolge der Inhomogenitäten des Natursteins beim Zersägen eine der Platten, so kann wegen der Strukturierung des Natursteins und wegen des angestrebten monolithischen Aussehens der Verbundplatten auch die benachbarte Platte für den hier in Rede stehenden Zweck nicht mehr verwendet werden.

An sich wäre es deshalb optimal, die Armierungsschicht an der Unterseite der herzustellenden Natursteinplatte anzubringen; dies war jedoch bisher wegen des Aussehens der aus Glasfaserrovinggewebe und Kunstharz bestehenden Armierungsschicht nicht möglich.

Der Erfindung lag die Aufgabe zugrunde, eine Natursteinplatte der eingangs erwähnten Art zu schaffen, die die vorstehend aufgeführten Nachteile nicht aufweist und sich billiger herstellen läßt. Diese Aufgabe wird erfindungsgemäß dadurch gelöst, daß die Armierungsschicht auf der Unterseite der Natursteinplatte angeordnet wird, was im Hinblick auf das geforderte Aussehen auch der Unterseite einer Treppenstufe dann möglich ist, wenn erfindungsgemäß die Armierungseinlage mit einer das Aussehen der Plattenunterseite verbessernden und gleichfalls in das Kunstharz eingebetteten Flachmaterialschicht abgedeckt wird. Als Armierungsschicht verwendet man zweckmäßigerweise wieder ein Glasfaserrovinggewebe, während für die Flachmaterialschicht jedes bekannte Flachmaterial verwendet werden kann, das sich mit Kunstharz tränken lässt und zu dem
gewünschten guten Aussehen der Unterseite der Treppenstufen führt. Denkbar sind also z.B. textile Stoffe,
ggf. bedruckte Papierbahnen und dergleichen. Bei einer
bevorzugten Ausführungsform der erfindungsgemässen Natursteinplatte wird für die Flachmaterialschicht ein
Faservlies und insbesondere ein Glasfaservlies verwendet, was auch noch geringfügig zur Erhöhung der Zugfestigkeit der Armierungsschicht beiträgt.

Als Kunstharz kann grundsätzlich jedes der bekannten
Giessharze verwendet werden, sofern dieses - mit oder
ohne Verwendung einer Haftvermittlerschicht - eine gute
Bindung mit der Natursteinplatte eingeht. Als besonders zweckmässig haben sich jedoch Polyester- und
Acrylharze erwiesen, wobei Acrylharz trotz seines
höheren Preises bevorzugt wird, da es eine höhere
Biskosität als Polyesterharz aufweist und deshalb
bei grobporigen Steinen wie beispielsweise Travertin
zu einem besseren Aussehen führt.

Bei der Herstellung erfindungsgemässer Verbundplatten
müssen also beim Aufsägen eines Natursteinblocks nur
noch halb so viel Sägeschnitte wie bisher erzeugt
werden, ausserdem entfällt das Polieren der Unterseite der Natursteinplatte und schliesslich ist die
Armierungsschicht dank ihrer Anordnung auf der Platenunterseite bei einer Biege- und/oder Torsionsbeanspruchung der Treppenstufe weit wirksamer als bei
den bekannten Natursteinplatten. Auch kann eine vorgegebene Stufendicke bei unten armierten Trittstufen
wesentlich exakter und damit kostensparender eingehalten werden als bei den bisher verwendeten Verbundplatten mit mittiger Armierung.

- 4 -

Bei der Herstellung einer erfindungsgemässen Natursteinplatte geht man am besten so vor, dass auf der
Plattenunterseite mit Randstreifen eine flache Wanne
gebildet wird, in die die Ar-

mierungseinlage, die Flachmaterialschicht und das Kunstharz
eingebracht werden. Um die Armierungseinlage und die Flachmaterialschicht soweit wie irgend möglich mit dem Kunstharz
zu tränken, wird dieses in die beiden Schichten eingewalzt
und dabei werden gleichzeitig Lufteinschlüsse aus der Armierungsschicht herausgewalzt. Es wird ferner empfohlen, Kunstharz
im Überschuß zu verwenden, um eine totale Tränkung der Armierungseinlage und der Flachmaterialschicht zu gewährleisten.

Zur Verbesserung der Oberfläche der Armierungsschicht wird
ferner empfohlen, diese nach dem Einbringen ihrer Bestandteile in die Wanne mit einer Folie abzudecken, die keine
Haftung mit dem Kunstharz eingeht. In Verbindung mit Randstreifen aus kompressiblem Material, insbesondere Schaumgummi, ermöglicht es diese Folie auch, die Armierungsschicht
nach dem Aufbringen der Folie mit einer Platte zu belasten,
so daß das Kunstharz in die Armierungseinlage und die Flachmaterialschicht hineingepreßt und Lufteinschlüsse zusammen mit
überschüssigem Kunstharz aus der Armierungsschicht herausgedrückt werden. Zum Belasten der Armierungsschicht verwendet
man am besten die nächste der zu armierenden Natursteinplatten, da man auf diese Weise eine starke Einsparung an
Produktionsfläche erzielt.

Weitere Merkmale, Vorteile und Einzelheiten der Erfindung ergeben sich aus der nachfolgenden Beschreibung und der beigefügten zeichnerischen Darstellung einer bevorzugten Ausführungsform einer erfindungsgemäßen Natursteinplatte sowie
des Herstellungsverfahrens; es zeigen

Figur 1     eine perspektivische Darstellung der Natursteinplatte in der Ansicht schräg von oben;

Figur 2          einen Schnitt nach der Linie 2-2 in Figur 1;

Figur 3          den in Figur 2 gezeigten Bereich der Natursteinplatte während des Herstellungsverfahrens, und

Figur 4          den in Figur 3 gezeigten Bereich der Natursteinplatte während einer späteren Phase des Herstellungsverfahrens.

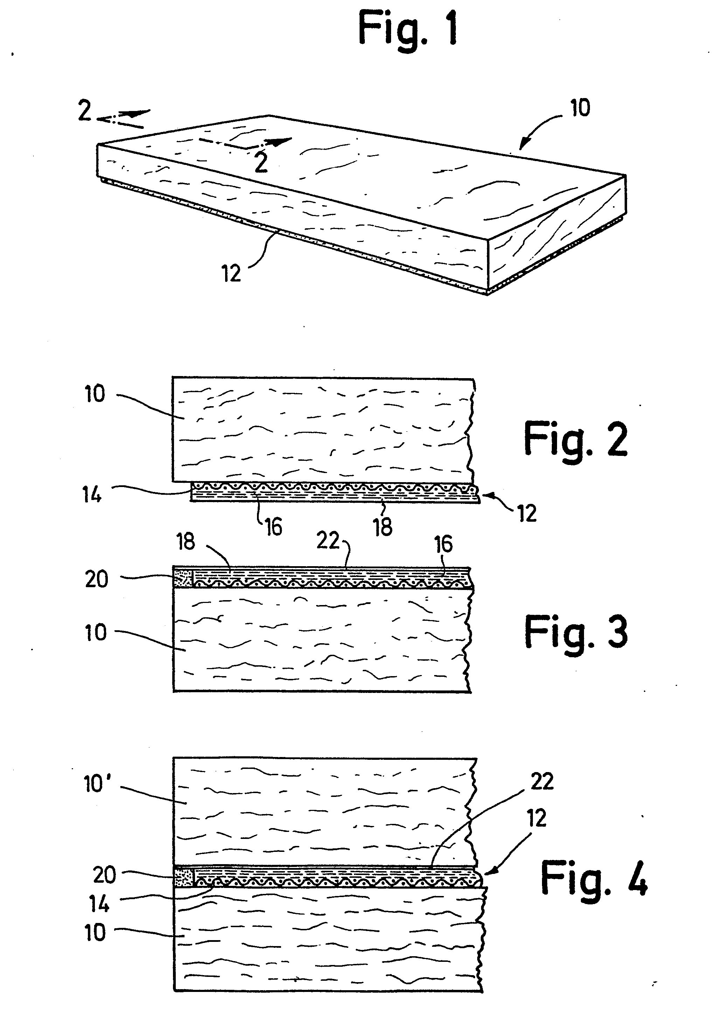

Wie die Figur 1 erkennen läßt, ist auf der Unterseite einer
Natursteinplatte 10 eine Armierungsschicht 12 angebracht, welche gemäß Figur 2 wie folgt aufgebaut ist: Der Natursteinplatte 10 zugewandt ist eine Armierungseinlage 14 aus einem
Glasfaserrovinggewebe, die mit einer Flachmaterialschicht 16
aus Glasfaservlies abgedeckt und zusammen mit der letzteren
in Kunstharz 18 eingebettet ist.

Bei der Herstellung der Armierungsschicht 12 geht man so vor,
daß man auf der Unterseite der Natursteinplatte 10 Randstreifen 20 befestigt, insbesondere anklebt, die den Rändern der
Natursteinplatte entlang laufen und so eine flache Wanne bilden. Will man die in Figur 2 links unten ersichtliche Stufe
vermeiden, kann man die Randstreifen natürlich auch auf die
Seitenflächen der Natursteinplatte 10 aufkleben und sie entsprechend weit über die Plattenunterseite überstehen lassen.
Am besten verwendet man für die Randstreifen 20 Schaumgummistreifen, und zwar aus einem geschlossenporigen Kunststoffschaum, damit das Kunstharz nicht in den Kunststoffschaum
eindringen kann und sich die Randstreifen 20 später wieder
leicht ablösen lassen.

In diese so erzeugte flache Wanne wird zunächst die Armierungseinlage 14 eingelegt, worauf diese mit der Flachmaterialschicht 16 abgedeckt wird. Dann gießt man Kunstharz in die
Wanne und walzt dieses mit Rillenwalzen in die Armierungseinlage 14 und die Flachmaterialschicht 16 ein, wobei gleichzeitig Luft aus den beiden Schichten herausgedrückt wird.
Schließlich deckt man das Ganze mit einer Folie 22 ab, bei
der es sich zweckmäßigerweise um eine Folie aus Polyethylenterephthalat handelt, die biaxial gestreckt und thermofixiert
ist. Solche Folien werden z. B. von der Firma KALLE angeboten.

Diese Folie hat den Vorzug, daß sie in Verbindung mit
Polyester- oder Acrylharz nicht zu Falten führt, und
außerdem läßt sie sich später wieder leicht ablösen.
Letzeres könnte bei einer anderen Folie natürlich auch durch
ein geeignetes Trennmittel auf der einen Folienseite erreicht
werden.

Schließlich legt man die nächste der zu armierenden Natursteinplatten - Natursteinplatte 10' in Figur 4 - auf die
Armierungsschicht und die Randstreifen 20, die dank ihrer
Elastizität nachgeben können, so daß überflüssiges Kunstharz zusammen mit weiteren Lufteinschlüssen aus der Flachmaterialschicht 16 und der Armierungseinlage 14 herausgedrückt werden. Anschließend wird dann die Natursteinplatte
10' in derselben Weise mit einer Armierungsschicht versehen, wie dies bei der Natursteinplatte 10 der Fall war.

0069797

A n s p r ü c h e

1. Im wesentlichen aus Naturstein oder gebundenen Natursteinteilen bestehende Steinplatte für Treppenstufen, welche mit einer Schicht armiert ist, die eine in Kunstharz eingebettete Armierungseinlage aus hochzugfestem Material aufweist, dadurch gekennzeichnet, dass die Armierungsschicht (12) auf der Unterseite der Natursteinplatte (lo) angeordnet und die Armierungseinlage (14) mit einer das Aussehen der Plattenunterseite verbessernden und gleichfalls in das Kunstharz (18) eingebetteten Flachmaterialschicht (16) abgedeckt ist.

2. Natursteinplatte nach Anspruch 1, dadurch gekennzeichnet, dass die Armierungseinlage (14) ein Gewebe aus Glasfaserrovings ist.

3. Natursteinplatte nach Anspruch 1 oder 2, dadurch gekennzeichnet, dass die Flachmaterialschicht (16) aus einem Faservlies, insbesondere einem Glasfaservlies, besteht.

4. Natursteinplatte nach Anspruch 1, d a d u r c h g e - k e n n z e i c h n e t, daß das Kunstharz (18) ein Polyester-, ein Acryl- oder ein Epoxydharz ist.

5. Verfahren zur Herstellung einer Natursteinplatte nach einem oder mehreren der vorstehenden Ansprüche, d a - d u r c h g e k e n n z e i c h n e t, daß auf der Unterseite der Natursteinplatte mit Randstreifen (20) eine flache Wanne gebildet wird und in diese die Armierungseinlage (14), die Flachmaterialschicht (16) und das Kunstharz (18) eingebracht werden.

6. Verfahren nach Anspruch 5, d a d u r c h g e k e n n - z e i c h n e t, daß das Kunstharz (18) in die Armierungseinlage (14) und die Flachmaterialschicht (16) eingewalzt wird und dabei gleichzeitig Lufteinschlüsse aus der Armierungsschicht (12) herausgewalzt werden.

7. Verfahren nach Anspruch 5 oder 6, d a d u r c h g e - k e n n z e i c h n e t, daß Kunstharz im Überschuß verwendet wird.

8. Verfahren nach einem oder mehreren der Ansprüche 5 bis 7, d a d u r c h g e k e n n z e i c h n e t, daß die Armierungsschicht (12) nach dem Einbringen ihrer Bestandteile in die Wanne mit einer Folie (22) abgedeckt wird, die keine Haftung mit dem Kunstharz eingeht.

9. Verfahren nach Anspruch 8, d a d u r c h  g e k e n n -
   z e i c h n e t, daß Randstreifen (20) aus kompressiblem
   Material verwendet werden  und daß die Armierungsschicht
   (12)·nach dem Aufbringen der Folie (22) mit einer Platte
   (10') belastet wird.

10. Verfahren nach Anspruch 9, d a d u r c h  g e k e n n -
    z e i c h n e t, daß als Platte (10') die nächste der
    zu armierenden Natursteinplatten verwendet wird.

1/1                    0069797

Fig. 1

Fig. 2

Fig. 3

Fig. 4

**0069797**

Nummer der Anmeldung

**Europäisches Patentamt**

**EUROPÄISCHER RECHERCHENBERICHT**

EP 81 10 5535.9

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| Y | <u>DE – U – 7 627 784</u> (H. SIEPERT) <br> * Ansprüche 1 bis 3; Fig. * <br> –– | 1-4 |
| Y | <u>FR – A – 2 029 282</u> (CARRIERES ET SCIE-RIES DE FRANCE) <br> * Seite 2, Zeilen 8 bis 22; Fig. 2 * <br> –– | 1 |
| A | <u>DE – U – 7 521 473</u> (T. SCHÖPFEL) <br> * Ansprüche 1, 2; Fig. 2a * <br> –– | |
| A | <u>DE – A1 – 2 621 118</u> (K. RÖHRS) <br> * Fig. 1 bis 3 * <br> –– | |
| A | <u>DE – U – 7 036 470</u> (F. SCHAUFFELE) <br> * Fig. 1 * <br> ———— | |

**KLASSIFIKATION DER ANMELDUNG (Int. Cl.³)**

E 04 F 11/14

B 32 B 13/00

**RECHERCHIERTE SACHGEBIETE (Int. Cl.³)**

B 32 B 13/00

E 04 F 11/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

| | Der vorliegende Recherchenbericht wurde für alle Patentansprüche erstellt. |
|---|---|

| Recherchenort <br> Berlin | Abschlußdatum der Recherche <br> 23-02-1982 | Prüfer <br> v. WITTKEN |
|---|---|---|

EPA form 1503.1  06.78